# EUROPÄISCHE PATENTSCHRIFT

(11) **EP 1 398 554 B1**
(45) Veröffentlichungstag und Bekanntmachung des Hinweises auf die Patenterteilung: **01.04.2015**
(21) Anmeldenummer: 03090293.6
(22) Anmeldetag: 11.09.2003
(51) Int. Cl.: B29L 31/24, B29C 45/14, B29L 23/18, F16L 11/15

(54) **Schlauchleitung und Verfahren zu deren Herstellung**
Hose and method of manufacturing the same
Tuyau flexible et son procédé de fabrication

(30) Priorität: 11.09.2002 DE 10244107
(43) Veröffentlichungstag der Anmeldung: 17.03.2004
(73) Patentinhaber: Senior Flexonics GmbH, 34121 Kassel (DE)
(72) Erfinder: Bürger, Stefan, 34225 Bauntal (DE); Eckl, Günter, 43134 Kassel (DE); Beck, Karsten, 34292 Ahntal (DE)
(74) Vertreter: Gross, Felix

(56) Entgegenhaltungen:
- EP-A- 1 048 881
- FR-A- 1 075 364
- US-A- 3 605 232

## Beschreibung

In Rohrleitungssystemen können durch Bewegungen, beispielsweise hervorgerufen durch Wärmedehnung, elastische Lagerung oder Schwingungen Spannungen in Rohrleitungsabschnitten auftreten, die ohne Gegenmaßnahmen zu Überlastung und Bruch führen können. Solche Bewegungen zwischen zwei Rohrleitungsenden oder einem Rohrleitungsende und einem Apparat oder Aggregat wie z.B. einem Kompressor, einem Motorblock, einem Ventilblock oder Instrumenten werden in der Regel durch den Einbau elastischer Leitungselemente aufgenommen. Dadurch werden Spannungen begrenzt und Überlastungen vermieden, die sonst durch Kräfte oder Momente beim Anschluss an starre Leitungen auftreten würden.

Geeignete elastische Elemente sind Schlauchleitungen aus Elastomeren, Metallschläuche oder Kompensatoren, die allesamt entsprechend dem Anwendungsfall mit Anschlusskupplungen versehen sind, aus geeigneten Werkstoffen bestehen, und durch verstärkende Umlagen oder Einlagen insgesamt so gestaltet sind, dass die Betriebsbedingungen in jedem Fall beherrscht werden.

Für die Einbauanordnung gilt, dass die von den angeschlossenen Rohrleitungen ausgehenden Bewegungen so auf das elastische Element einwirken müssen, dass es in der Lage ist, diese sicher und dauerhaft aufzunehmen, ohne Überlastungs- oder Ermüdungserscheinungen zu zeigen.

Den Einbau einer Schlauchleitung wird beispielsweise so gestaltet, dass die Bewegung quer zur Schlauchachse wirkt und das elastische Element eine laterale Biegung vollzieht, weil ein Schlauch keine oder nur geringfügige axiale Bewegungen aufzunehmen vermag, dagegen sehr gut angulare und laterale Bewegungen.

Selten treten aber Bewegungen nur aus einer einzigen Richtung auf. In den allermeisten Anwendungsfällen handelt es sich um Bewegungen in mehreren Ebenen und verschiedenen Richtungen. Hier haben sich, neben dem erwähnten Lateraleinbau, also dem Einbau mit bewusst parallel versetzten Gegenanschlüssen, ein Bogeneinbau, z.B. mit einem 90° Bogen, bewährt, bei dem die zu verbindenden Gegenanschlüsse so angeordnet sind , dass die elastische Schlauchleitung von vornherein im Bogen verlegt ist. Ein derart verlegter Schlauch kann Bewegungen aus verschiedenen Ebenen aufnehmen.

Für die meisten Schlauchleitungen stellt diese Biegung beim Einbau, auch wenn sehr kleine Biegeradien vorgegeben sind, keine übermäßige Belastung dar, weil diese nur einmal geschieht und deshalb nicht zu einer schnelleren Ermüdung führt.

Es gibt aber auch Schlauchausführungen, insbesondere solche für hohe Druckbelastung, bei denen der Biegevorgang beim Einbau bereits beachtliche Spannungen hervorruft, die zusätzlich zu den Spannungen, die durch den Innendruck und die Bewegungen entstehen, von dem Element aufgenommen werden müssen. Beispielsweise lassen sich Gummi-Hochdruckschläuche wegen der zahlreichen starken Einlagen und der dadurch bedingten dicken Wandstärke nur unter großer Kraftanstrengung biegen.

Dies gilt auch für eine Wellschlauchausführung, bei der der Zwischenraum zwischen dem äußeren Wellenprofil und dem darüber angeordneten Festigkeitsträger mit einem Elastomer gefüllt ist, und in der Regel auch ein äußerer Kunststoffmantel aufgebracht ist. Eine derartige Konstruktion ist beschriebenen in DE-A1-199 19 715, DE-U1-104 200 2457 und EP-A2-1 048 881.

Aus der dem Oberbegriff des unabhängigen Vorrichtungsanspruchs 1 enstsprechenden FR-A-1 075 364 ist zudem eine gerade Schlauchleitung bekannt, die einen mit einer Umhüllung versehenen Wellschlauch aufweist. Zwischen der Umhüllung und dem Wellschlauch ist ein Elastomer angeordnet.

Durch das Füllen der Wellenzwischenräume mit elastischem Kunststoff werden die Eigenschaften verändert: Die Druckfestigkeit und die Schwingungsdämpfung wird deutlich erhöht, die Beweglichkeit der Wellen aber drastisch eingeschränkt. Dies liegt daran, dass sich hier zwei Flexibilitätsprinzipien überlagern: Während ein Elastomerschlauch seine Beweglichkeit durch die Elastizität des Werkstoffes erreicht,kann diese bei Metall nur über die Formgebung der Wandung mit einer Vielzahl von Wellen ermöglicht werden.

Solange die Zwischenräume der Wellen außen nicht durch einen inkompressiblen Stoff behindert werden, der die freie Beweglichkeit jeder einzelnen Welle einschränkt, sind selbst enge Biegeradien problemlos möglich. Alle Wellen können sich im Zugbereich dehnen und im Druckbereich stauchen.

Sehr viel schwieriger wird das Biegeverhalten des in dem genannten Stand der Technik beschriebenen Wellschlauches miteiner äußeren Füllung, die in den Raum eingebracht ist, der von der Außenkontur der Wellen und einem darüber liegenden Festigkeitsträger begrenzt ist. Bei der Biegung dieses Schlauches wird die zwischen zwei Wellen etwa ringscheibenförmig ausgebildete Füllung auf der Biegeinnenseite in Längsrichtung der Schlauchachse zusammengepresst, so wie der Wellenabstand ebenfalls gestaucht ist, das heißt geringer geworden ist. Am Biegeaußenbogen wird die Füllung hingegen gezogen, wie auch die Wellen in Längsrichtung des Schlauches auseinander gezogen sind.

Tatsächlich wird dabei zwangsweise ein Materialfluß des Elastomeres vom Innenbogen zum Außenbogen des Schlauches stattfinden, um einen Volumenausgleich zu erreichen, da es sich bei dem Elastomer um ein inkompressibles Medium handelt.

Der Volumenausgleich des Elastomeres erfolgt dabei nicht ohne wechselweise Krafteinwirkungen zwischen Wellschlauch und der Elastomerfüllung. Deshalb werden bei dieser Schlauchausführung allein durch die Biegung beim Einbau, insbesondere bei engen Biegeradien, nicht unerhebliche Spannungen auftreten, die zu den aufgabegemäßen Spannungen, hervorgerufen durch Innendruck und Bewegung, hinzukommen.

Die vorliegende Erfindung hat zur Aufgabe, sich dieser Nachteile anzunehmen. Diese Aufgabe wird durch die in den unabhängigen Ansprüchen angegebene Erfindung gelöst. Vorteilhafte Ausgestaltungen sind den Unteransprüchen zu entnehmen.

Erfindungsgemäß ist ein Verfahren geschaffen zur Herstellung einer Schlauchleitung mit einer Innenschicht und einem äußeren Festigkeitsträger, mit folgenden Schritten:
Verformen der Schlauchleitung, um der Schlauchleitung eine vorbestimmte Einbauform zu verleihen, wobei das Verformen der Schlauchleitung durch Biegen der Schlauchleitung durchgeführt wird; und
Einbringen eines Elastomers in einen Zwischenraum zwischen der Innenschicht und dem äußeren Festigkeitsträger, im verformten Zustand der Schlauchleitung.

Demnach wird die Schlauchleitung vor Einbau in die benötigte Einbauform gebracht. Erst nach Herstellung des Einbauzustandes wird das Elastomer in den Zwischenraum zwischen der Innenschicht und dem äußeren Festigkeitsträger eingebracht.

Als Folge dessen breitet sich das Elastomer in dem nach Formung der Schlauchleitung vorhandenen Zwischenraum zwischen der Innenschicht und dem äußeren Festigkeitsträger aus. Würde das Elastomer bereits vor Formung der Schlauchleitung in den Zwischenraum eingebracht, so würden bei der Formung Spannungen auftreten, da das Elastomer inkompressibel ist. Solche Spannungen werden somit vermieden.

Erfindungsgemäß ist außerdem eine Schlauchleitung geschaffen, mit einer als Wellschlauch ausgebildeten Innenschicht, einem äußeren Festigkeitsträger, der auf äußeren Wellenbergen des Wellschlauches aufliegt, und einer Elastomerschicht, die einen Zwischenraum zwischen den inneren Wellenbergen des Wellschlauches und dem äußeren Festigkeitsträger füllt, dadurch gekennzeichnet, dass die Schlauchleitung bogenförmig ist, und das Volumen der Elastomerschicht an der Bogeninnenseite entsprechend der Biegung des Wellschlauchs geringer ist als an der Bogenaußenseite.

Unter Bogenform ist in diesem Zusammenhang eine beliebige Einbauform der Schlauchleitung zu verstehen, die durch Verbiegen der Innenschicht und des äußeren Festigkeitsträgers vor Einbringen des Elastomers hergestellt werden kann.

Durch Reduzierung des Volumens der Elastomerschicht an der Bogeninnenseite gegenüber deren Volumen an der Bogenaußenseite werden formbedingte Spannungen im Einbauzustand der Schlauchleitung aufgrund der Inkompressibilität des Elastomers vermieden.

Die so gestaltete Schlauchleitung bildet ein Formstück, das sich beim Einbau in einem spannungsfreien Zustand befindet und dadurch besser geeignet ist, die Anforderungen von Druck und Bewegung zu erfüllen, die während des Betriebes auftreten.

Außerdem ist das elastische Formstück wesentlich einfacher einzubauen, da keine Kräfte für das Biegen zur Verbindung der beiden mit räumlichem Abstand zueinander angeordneten Rohrenden aufgewendet werden müssen. Das Formstück wird einfach zwischen die zu verbindenden Rohrenden eingelegt und die Anschlüsse miteinander befestigt.

Das Formstück wird weiterhin hoher Druck- und Schwingungsbeanspruchung gerecht. Die Innenschicht ist vorzugsweise absolut permeationsdicht und insbesondere aus rost- und säurebeständigem Edelstahl hergestellt.

Dadurch eignet sich das elastische Formstück besonders gut für die Schwingungs- und Bewegungsabsorption in modernen Klimaanlagen, die mit Kohlensäure als Kältemittel betrieben werden. Hier haben sich reine Elastomereschläuche nicht bewährt, weil diese werkstoffbedingt nicht ausreichend diffusionsdicht sind.

Besonders vorteilhaft ist die Anordnung der einzelnen am Aufbau der Schlauchwand beteiligten Elemente und Werkstoffe, und vor allem die Reihenfolge der Fertigungsschritte unter Verwendung formgestaltender Vorrichtungen.

Die erfindungsgemäße Schlauchleitung zeichnet sich vor allem dadurch aus, dass selbst bei hohen Innendrücken eine Verformung der Wellen vermieden wird, weil die Wellenflanken durch die Elastomerfüllung abgestützt werden.

Eine beispielhafte Ausgestaltung der Erfindung wird nun anhand der Zeichnungen erläutert, und es zeigen:
Figur 1 schematisch eine Schlauchleitung nach einer Ausgestaltung der Erfindung;
Figur 2 schematisch einen Teil einer Schlauchleitung nach einer Ausgestaltung der Erfindung im gebogenen Zustand, bei der insbesondere die unterschiedlichen Wellenabstände im Innen- und im Außenbogen dargestellt sind; und
Figur 3 schematisch einen entsprechenden Teil einer gebogenen Schlauchleitung nach dem Stand der Technik.

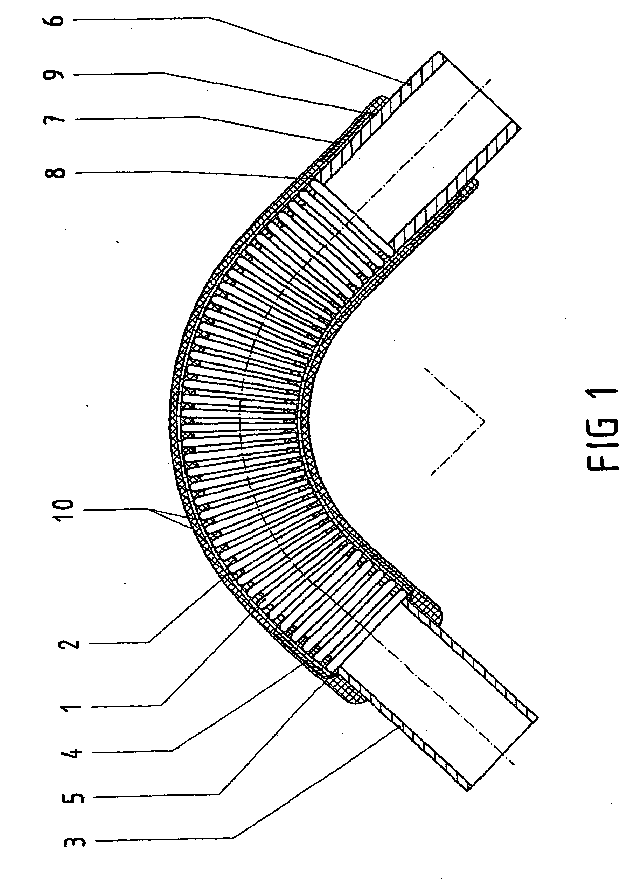

Figur 1 zeigt eine Schlauchleitung nach einer Ausgestaltung der Erfindung. Das durch die Schlauchleitung gebildete Formstück ist ein einbaufertiges Element und weist an beiden Enden dicht und fest verbundene Anschlüsse 3 bzw. 6 auf.

Die dem Durchflussmedium zugewandte Innenwand der Schlauchleitung ist ein gewellter Metallschlauch 1 aus vorzugsweise rost- und säurebeständigem Edelstahl oder einer anderen geeigneten metallischen Legierung. Der Wellschlauch 1 kann wendel- oder parallelgewellt sein.

Unmittelbar auf der radial äußeren Oberfläche der Wellen ist ein Festigkeitsträger 2 aufgebracht, der aus einem Geflecht oder einer Umlage aus metallischem Draht oder Band, vorzugsweise aus korrosions- oder hochfesten Legierungen, besteht.

Eine (nicht gezeigte) Zwischenlage aus einem porösen Kunststoffgeflecht kann in besonderen Anwendungsfällen von Vorteil sein, um einen möglichen Reibverschleiß zwischen Wellschlauch-Außendurchmesser und Geflecht zu mindern.

Der Wellschlauch 1 und der äußere Festigkeitsträger 2 sind mit den Anschlussverbindungen 3 und 6 verschweißt, verlötet oder aber kraft- oder formschlüssig verbunden. Es sind alle bekannten Verbindungstechniken denkbar; z.B. können der Wellschlauch 1 und der Festigkeitsträger 2 über eine einzige Schweißnaht 5 mit den Anschlüssen 3 oder 6 verbunden sein. Alternativ kann der Wellschlauch 1 mit den Anschlüssen 3 oder 6 über eine erste Schweißnaht 8 und der Festigkeitsträger 2 mit den Anschlüssen 3 oder 6 über eine zweite Schweißnaht 9 verbunden sein.

Die so hergestellte Schlauchleitung kann nun problemlos allen bekannten Dichtheitsprüfverfahren unterzogen werden, ohne dass zusätzliche Füllungen oder dichte Umlagen diese Prüfungen verhindern oder gegebenenfalls verfälschen könnten. Auch sehr hochwertige Dichtheitsprüfungen z.B. Helium-Lecktestverfahren sind durchführbar.

Erst nach der vollendeten Dichtheits- oder auch Festigkeitsprüfung wird die Schlauchleitung zum Formstück weiterverarbeitet. Dazu wird diese in ein Werkzeug eingelegt, das ihr die Form verleiht, die durch die spätere Einbausituation vorbestimmt ist.

Das Werkzeug ist so ausgebildet, dass zwischen der Außenkontur der Schlauchleitung und der Innenkontur des Werkzeuges ein definierter Zwischenraum freigehalten wird, der durch ein Elastomer 10 gefüllt wird. Das Elastomer 10 ist wegen der guten Temperaturbeständigkeit vorzugsweise ein Silikonkautschuk.

Mittels einer geeigneten Anordnung der Einspritzdüsen und Entlüftungsöffnungen und unter genauer Einhaltung des vorgesehenen Einspritzdruckes und des Einspritzvolumens wird der Kunststoff nicht nur auf die Oberfläche des Schlauches gespritzt, sondern auch durch den porösen Festigkeitsträger 2 (Geflecht oder Umlage) hindurchgepresst, so dass der Raum zwischen dem Festigkeitsträger 2 und der Außenkontur des gebogenen Wellschlauches 1 vollkommen ausgefüllt wird.

Dieser Füllprozess kann durch einen gewissen Unterdruck innerhalb des formgebenden Werkzeuges unterstützt werden.

Der eingespritzte Kunststoff umschließt folglich jede einzelne Welle des Wellschlauches 1, der gemäß dem oben beschriebenen Verfahren bereits vor Einspritzen des Kunststoffes den Biegeradius des Einbauzustandes aufweist. Dementsprechend sind die im Biegeaußendurchmesser gedehnten und im Biegeinnendurchmesser gestauchten Wellen nunmehr in Kunststoff eingebettet.

Zwischen dem eingebrachten Kunststoff und den Wellen des Metallschlauches gibt es zu diesem Zeitpunkt keinerlei Krafteinwirkung und Spannungen, trotz des gebogenen Einbauzustandes.

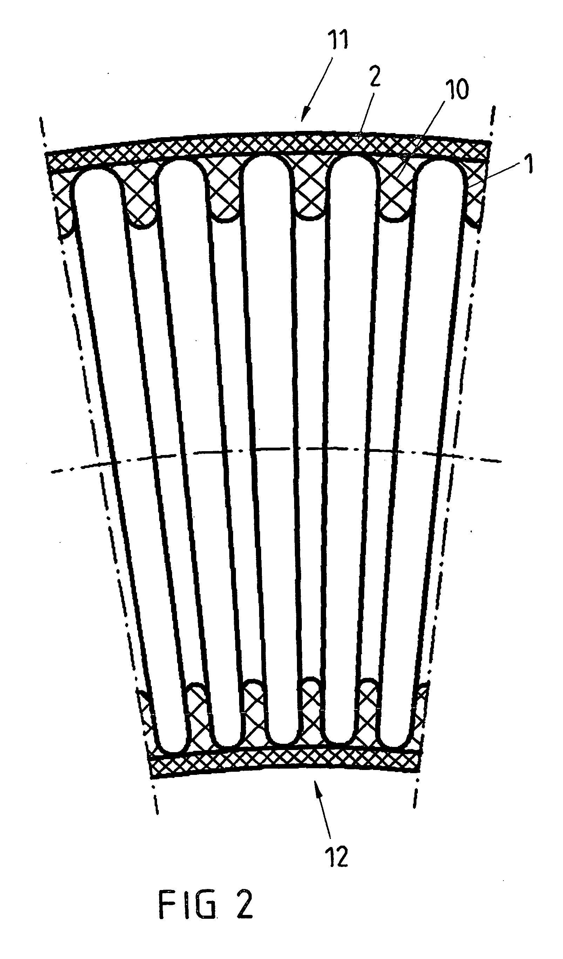

Figur 2 zeigt einen Teil einer Schlauchleitung nach einer Ausgestaltung der Erfindung im gebogenen Zustand. An der Bogenaußenseite 11 sind die Wellen gedehnt, während die Wellen an der Bogeninnenseite 12 gestaucht sind. Dementsprechend ist das Volumen der Wellentäler zwischen dem Wellschlauch 1 und dem äußeren Festigkeitsträger 2 an der Bogenaußenseite größer, als an der Bogeninnenseite. Da das Elastomer 10 erst nach Biegung des Wellschlauches 1 und des äußeren Festigkeitsträgers 2 in den Zwischenraum eingespritzt wird, passt sich das Volumen des Elastomers 10 an das vorhandene Volumen in den Wellentälern an.

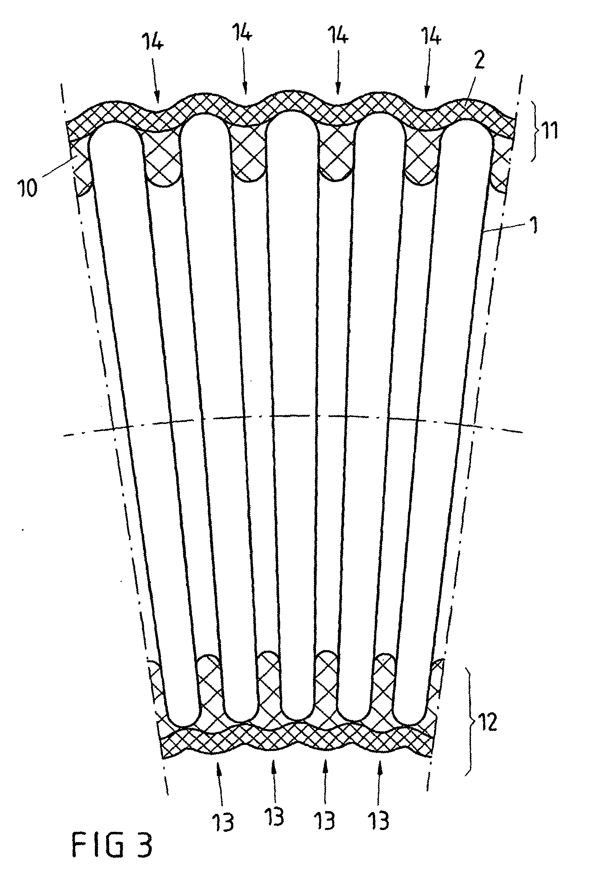

Figur 3 illustriert einen Teil einer Schlauchleitung, die erst nach Einbringen des Elastomers 10 zwischen den inneren Wellschlauch 1 und den äußeren Festigkeitsträger 2 in die Einbauform gebogen worden ist (Stand der Technik).

Wegen der Volumenänderung, die sich aus der Veränderung der Wellenabstände am Innen- und Außenbogen ergibt, ist auch das Elastomer gezwungen, auszuweichen. An der Bogenaußenseite 11, wo die Wellen gedehnt sind, schnürt das Elastomer 10 in Richtung der Wellentäler ein, so dass sich der äußere Festigkeitsträger 2 in diesen Bereichen ebenfalls nach innen (in die Wellentäler hinein) anschmiegt (Bereiche 14).

Umgekehrt wird der äußere Festigkeitsträger 2 an der Bogeninnenseite 12 (wo die Wellen gestaucht werden) in den Bereichen der Wellentäler nach außen gedrückt, da hier das Volumen zwischen den Wellentälern durch die Stauchung (hervorgerufen durch die Biegung ) kleiner geworden ist als das Volumen des Elastomers in den Wellentälern im geraden Schlauch (Bereiche 13).

Diese Verformungen werden durch den unvollkommenen Volumenausgleich vom Biegeinnen- zum Außenbogen hervorgerufen und sind ein Indiz für Spannungen an den Flanken der Wellen.

Durch die erfindungsgemäße Art der Fertigung werden diese Spannungen vollständig vermieden. Darüber hinaus ändern sich der Aufbau der Schlauchwandung und die Eigenschaften des Formstückes grundsätzlich. Die Füllung der Zwischenräume der Wellen mit inkompressiblen Kunststoff bewirkt eine wichtige Abstützung der Wellenflanken und steigert damit die Druckfestigkeit des fertigen Elementes und dient gleichzeitig der optimalen Schwingungsabsorption.

Das derart gefertigte Formstück erfüllt in idealer Weise speziell die Anforderungen, die beim Einbau in Klimaanlagen gestellt werden, und insbesondere jene hohen Ansprüche, die bei modernen umweltschonenden, kohlensäurebetriebenen Anlagen zu erfüllen sind.

Zusammenfassend ist die Schlauchleitung:
- absolut diffusionsdicht
- korrosionsbeständig
- schwingungsdämpfend
- für höchste Druckstufen einsetzbar
- leicht einbaubar, da im Einbauzustand spannungslos gebogen
- leicht auf Dichtheit/Festigkeit zu prüfen
- preiswert herzustellen.

Anzumerken ist, dass die Erfindung nicht auf das beschriebene Ausführungsbeispiel beschränkt ist, sondern Variationen innerhalb des durch die Ansprüche definierten Schutzbereiches umfasst.

## Patentansprüche

1. Verfahren zur Herstellung einer Schlauchleitung mit einer Innenschicht (1) und einem äußeren Festigkeitsträger (2), mit folgenden Schritten:
Verformen der Schlauchleitung, um der Schlauchleitung eine vorbestimmte Einbauform zu verleihen, wobei das Verformen der Schlauchleitung durch Biegen der Schlauchleitung durchgeführt wird; und
Einbringen eines Elastomers in einen Zwischenraum zwischen der Innenschicht und dem äußeren Festigkeitsträger, im verformten Zustand der Schlauchleitung.

2. Verfahren nach Anspruch 1, wobei die Innenschicht durch einen Wellschlauch gebildet ist, und der äußere Festigkeitsträger aus einem Geflecht oder einer Umlage aus metallischem Draht oder Band besteht.

3. Verfahren nach Anspruch 2, wobei der äußere Festigkeitsträger auf den nach außen weisenden Wellenbergen des Wellschlauches anliegt, und der Zwischenraum zwischen dem Wellschlauch und dem äußeren Festigkeitsträger durch den Raum zwischen den nach innen weisenden Wellenbergen und dem äußeren Festigkeitsträger gebildet ist.

4. Verfahren nach einem der vorhergehenden Ansprüche, wobei das Elastomer durch Hindurchpressen durch den äußeren Festigkeitsträger in den Zwischenraum eingebracht wird.

5. Verfahren nach Anspruch 4, wobei das Elastomer auf die Oberfläche des äußeren Festigkeitsträgers gespritzt wird, wodurch das Elastomer durch den äußeren Festigkeitsträger gepresst wird.

6. Verfahren nach einem der vorhergehenden Ansprüche, wobei das Elastomer durch Silikonkautschuk gebildet wird.

7. Verfahren nach einem der vorhergehenden Ansprüche, mit folgenden Schritten:
Einlegen der Schlauchleitung in ein Werkzeug, das der Schlauchleitung die Einbauform verleiht, wobei zwischen der Außenkontur des Schlauchleitung und der Innenkontur des Werkzeuges ein Zwischenraum besteht; und
Füllen des Zwischenraumes zwischen der Innenkontur des Werkzeuges und der Außenkontur der Schlauchleitung mit dem Elastomer.

8. Verfahren nach Anspruch 7, mit folgendem Schritt:
Erzeugen eines Unterdrucks in dem Werkzeug beim Füllen des Zwischenraumes zwischen der Innenkontur des Werkzeuges und der Außenkontur der Schlauchleitung mit dem Elastomer.

9. Schlauchleitung, mit einer als Wellschlauch ausgebildeten Innenschicht (1), einem äußeren Festigkeitsträger (2), der auf äußeren Wellenbergen des Wellschlauches (1) aufliegt, und einer Elastomerschicht (10), das einen Zwischenraum zwischen den inneren Wellenbergen des Wellschlauches und dem äußeren Festigkeitsträger (2) füllt,
dadurch **gekennzeichnet,** dass
die Schlauchleitung bogenförmig ist und das Volumen der Elastomerschicht (10) an der Bogeninnenseite (12) entsprechend der Biegung des Wellschlauchs geringer ist als an der Bogenaußenseite (11).

10. Schlauchleitung nach Anspruch 9, wobei das Volumen der Elastomerschicht (10) an der Bogenaußenseite (11) proportional und an der Bogeninnenseite (12) umgekehrt proportional zur Biegung der Schlauchleitung ist.

11. Schlauchleitung nach Anspruch 9 oder 10, wobei der äußere Festigkeitsträger (2) aus einem Geflecht oder einer Umlage aus metallischem Draht oder Band besteht.

12. Schlauchleitung nach einem der Ansprüche 9 bis 11, wobei der Wellschlauch aus Edelstahl ist.

13. Schlauchleitung nach einem der Ansprüche 9 bis 12, wobei die Elastomerschicht (10) durch Silikonkautschuk gebildet ist.

14. Schlauchleitung nach einem der Ansprüche 9 bis 13, wobei die Schlauchleitung ein spannungsfreies Formstück ausbildet.

15. Schlauchleitung nach einem der Ansprüche 9 bis 14, wobei das Volumen der Elastomerschicht (10) zwischen den Wellen des Wellschlauchs (1) an der Bogeninnenseite (12) entsprechend der Verformungsgeometrie der Wellen kleiner ist als das entsprechende Volumen an der Bogenaussenseite (11).

## Claims

1. Method for manufacturing a hose line with an inner coating (1) and an outer strength carrier (2) with the following steps:
deforming the hose line in order to provide a predetermined installation form to the hose line, wherein the deforming of the hose line is conducted by bending the hose line; and
inserting an elastomer into an intermediate space between the inner coating and the outer strength carrier in the deformed state of the hose line.

2. Method according to claim 1, wherein the inner coating is formed by a corrugated hose and the outer strength carrier consists of a mash or coat of metallic wire or ribbon.

3. Method according to claim 2, wherein the outer strength carrier rests against the wave crests of the corrugated hose pointing outwards and the intermediate space between the corrugated hose and the outer strength carrier is formed by the space between the wave crests pointing inwards and the outer strength carrier.

4. Method according to one of the preceding claims, wherein the elastomer is inserted into the intermediate space by pressing through the outer strength carrier.

5. Method according to claim 4, wherein the elastomer is sprayed onto the surface of the outer strength carrier, whereby the elastomer is pressed through the outer strength carrier.

6. Method according to one of the preceding claims, wherein the elastomer is formed by silicon rubber.

7. Method according to one of the preceding claims of the following steps:
inserting the hose line into a tool, that provides the installation form to the hose line, wherein an intermediate space consists between the outer contour of the hose line and the inner contour of the tool; and
filling the intermediate space between the inner contour of the tool and the outer contour of the hose line with the elastomer.

8. Method according to claim 7 with the following step:
generating a vacuum in the tool when filling the intermediate space between the inner contour of the tool and the outer contour of the hose line with the elastomer.

9. Hose line with an inner coating (1) formed as an corrugated hose, an outer strength carrier (2), which rests on the outer wave crests of the corrugated hose (1), and an elastomer layer (10), which fills an intermediate space between the inner wave crests of the corrugated hose and the outer strength carrier (2),
**characterized in that**
the hose line is arched and the volume of the elastomer layer (10) at the arch inner side (12) is lower in respect to the arch outer side (11) corresponding to the bending of the corrugated hose.

10. Hose line according to claim 9, wherein the volume of the elastomer layer (10) at the arch outer side (11) is proportional and at the arch inner side (12) inversely proportional to the bending of the hose line.

11. Hose line according to claim 9 or 10, wherein the outer strength carrier (2) consists of a mesh or a coat of metallic wire or ribbon.

12. Hose line according to one of the claims 9 to 11, wherein the corrugated hose is made of stainless steel.

13. Hose line according to one of the claims 9 to 12, wherein the elastomer layer (10) is formed by silicon rubber.

14. Hose line according to one of the claims 9 to 13, wherein the hose line forms a tension-free shaped piece.

15. Hose line according to one of the claims 9 to 14, wherein the volume of the elastomer layer (10) between the waves of the corrugated hose (1) at the arch inner side (12) corresponding to the deformation geometry of the waves is smaller than the corresponding volume at the arch outer side (11).

## Revendications

1. Procédé de fabrication d'un tuyau flexible avec une couche intérieure (1) et un support de résistance (2) extérieur, avec les étapes suivantes :
la déformation du tuyau flexible afin de conférer au tuyau flexible une forme de montage prédéterminée, la déformation du tuyau flexible étant réalisée par pliage du tuyau flexible ; et
l'introduction d'un élastomère dans un espace intermédiaire entre la couche intérieure et le support de résistance extérieur à l'état déformé du tuyau flexible.

2. Procédé selon la revendication 1, la couche intérieure étant formée par un tuyau ondulé et le support de résistance extérieur se composant d'un tressage ou d'un repliage de fil ou de bande métallique.

3. Procédé selon la revendication 2, le support de résistance extérieur reposant sur les sommets tournés vers l'extérieur du tuyau ondulé, et l'espace intermédiaire entre le tuyau ondulé et le support de résistance extérieur étant formé par l'espace entre les sommets tournés vers l'intérieur et le support de résistance extérieur.

4. Procédé selon l'une quelconque des revendications précédentes, l'élastomère étant introduit par pressage au travers du support de résistance extérieur dans l'espace intermédiaire.

5. Procédé selon la revendication 4, l'élastomère étant pulvérisé sur la surface du support de résistance extérieur, par quoi l'élastomère est pressé par le support de résistance extérieur.

6. Procédé selon l'une quelconque des revendications précédentes, l'élastomère étant formé par du caoutchouc de silicone.

7. Procédé selon l'une quelconque des revendications précédentes, avec les étapes suivantes :
l'introduction du tuyau flexible dans un outil qui confère au tuyau flexible la forme de montage, un espace intermédiaire se trouvant entre le contour extérieur du tuyau flexible et le contour intérieur de l'outil ; et
le remplissage de l'espace intermédiaire entre le contour intérieur de l'outil et le contour extérieur du tuyau flexible avec l'élastomère.

8. Procédé selon la revendication 7, avec l'étape suivante :
la génération d'une dépression dans l'outil lors du remplissage de l'espace intermédiaire entre le contour intérieur de l'outil et le contour extérieur du tuyau flexible avec l'élastomère.

9. Tuyau flexible avec une couche intérieure (1) réalisée comme un tuyau ondulé, un support de résistance extérieur (2) qui repose sur des sommets du tuyau ondulé (1), et une couche élastomère (10) qui remplit un espace intermédiaire entre les sommets intérieurs dru tuyau ondulé et le support de résistance extérieur (2),
**caractérisé en ce que**
le tuyau flexible est arqué et le volume de la couche élastomère (10) sur le côté intérieur de l'arc (12) selon le pliage du tuyau ondulé est inférieur à celui sur le côté extérieur de l'arc (11).

10. Tuyau flexible selon la revendication 9, le volume de la couche élastomère (10) sur le côté extérieur de l'arc (11) étant proportionnel et sur le côté intérieur de l'arc (12) inversement proportionnel au pliage du tuyau flexible.

11. Tuyau flexible selon la revendication 9 ou 10, le support de résistance extérieur (2) se composant d'un tressage ou d'un repliage de fil ou de bande métallique.

12. Tuyau flexible selon l'une quelconque des revendications 9 à 11, le tuyau ondulé étant en acier inoxydable.

13. Tuyau flexible selon l'une quelconque des revendications 9 à 12, la couche élastomère (10) étant formée de caoutchouc de silicone.

14. Tuyau flexible selon l'une quelconque des revendications 9 à 13, le tuyau flexible réalisant une pièce moulée sans tension.

15. Tuyau flexible selon l'une quelconque des revendications 9 à 14, le volume de la couche en élastomère (10) entre les ondulations du tuyau ondulé (1) sur le côté intérieur de l'arc (12) selon la géométrie de déformation des ondulations étant inférieur au volume correspondant sur le côté extérieur de l'arc (11).
